# EUROPÄISCHE PATENTSCHRIFT

(11) **EP 0 326 818 B1**
(45) Veröffentlichungstag und Bekanntmachung des Hinweises auf die Patenterteilung: **06.04.1994**
(21) Anmeldenummer: 89100379.0
(22) Anmeldetag: 11.01.1989
(51) Int. Cl.: F26B 7/00, F26B 23/00, F26B 21/14

(54) **Verfahren zum Entzug von Flüssigkeit aus feuchtem Material**
Process to extract liquid from moist material
Procédé pour extraire du liquide d'un matériau humide

(30) Priorität: 03.02.1988 DE 3803109
(43) Veröffentlichungstag der Anmeldung: 09.08.1989
(73) Patentinhaber: MASCHINENFABRIK GUSTAV EIRICH, D-74736 Hardheim (DE)
(72) Erfinder: Dürr, Herbert, Dipl.-Ing., D-6967 Buchen (DE)
(74) Vertreter: Weber, Dieter, Dr.

(56) Entgegenhaltungen:
- EP-A- 0 240 793
- WO-A-83/00547
- WO-A-86/07547
- CH-A- 519 691
- DE-A- 3 111 223
- DE-A- 3 603 317
- DE-B- 1 119 773
- DE-C- 98 140
- DE-C- 220 834
- FR-A- 1 553 117
- US-A- 2 746 168
- US-A- 3 949 485
- US-A- 4 467 532
- US-A- 4 601 115
- PATENT ABSTRACTS OF JAPAN, Band 10, Nr. 185 (C-357)[2241], 27. Juni 1986;& JP-A-61 33 225 (YAMAKITA TEKKOSHO K.K.) 17-02-1986

## Beschreibung

Verfahren zum Trocknen von feuchtem Material sind bekannt und werden bereits in der Praxis angewendet.

So kennt man zum Beispiel ein Verfahren zum Trocknen von feuchtem Schüttgut, z. B. Bremsbelagmassen, bei welchem das Schüttgut in einer Mischmaschine mechanisch aufbereitet und befeuchtet wird. Im Anschluß an die mechanische Aufbereitung wird das feuchte Schüttgut entleert und portionsweise auf Horden verteilt. Diese Horden werden in einen Schrank gebracht und mit Abstand übereinander gestapelt. Anschließend wird warme Luft durch das Innere des verschlossenen Schrankes geführt und die Trocknung des Schüttgutes herbeigeführt. Diesem Verfahren haftet der Nachteil an, daß das Schüttgut aus der Mischmaschine entnommen, auf die Horden verteilt und im allgemeinen von Hand in den Trockenschrank eingeführt werden muß. Darüber hinaus handelt es sich hierbei um einen zeit- und energieaufwendigen Prozeß. Außerdem führt dieser Trocknungsprozeß zu einem Produkt, welches teilweise zusammenklebt, so daß im Beispiel der Bremsbelagmassen die Preßformen nicht ohne weiteres gefüllt werden können.

Man kennt auch Trocknungsverfahren, bei welchen das feuchte Schüttgut sogenannten Fließbett-Trocknern zugeführt wird. Es handelt sich hierbei um eine Vorrichtung, bei welcher die trockene Luft über einen Siebboden oder dergleichen eingeführt und das Mischgut von unten durchströmt wird. Auch dieser Prozeß hat einen entscheidenden Nachteil darin, daß die notwendige Luftgeschwindigkeit einerseits aufgrund der sich ändernden Dichte des Materials infolge des Trocknungsvorganges veränderlich ist und daß andererseits von vornherein Mischgutagglomerate oder dergleichen in unterschiedlicher Größe vorliegen. Fließbett-Trockner arbeiten nur dann optimal, wenn ein möglichst gleichmäßiges Korn vorliegt, so daß die Fließgeschwindigkeit der Trocknungsluft so eingestellt werden kann, daß das zu trocknende Gut sich gerade in der Schwebe hält. Bei einer heterogenen Größenverteilung des Mischgutes kann diese optimale Luftgeschwindigkeit nicht eingestellt werden. Das bedeutet, daß leichtere Teile mit dem Luftstrom weggetragen werden, sich aber schwerere dem Trocknungsprozeß weitgehend entziehen können, weil sie nicht in den Schwebezustand übergeführt werden können.

Es sind auch schon Trocknungsverfahren bekannt geworden, bei welchen das Mischgut im Mischbehälter belassen wird. Hierbei handelt es sich im allgemeinen um Mischvorrichtungen mit einem horizontal angeordneten, stillstehenden Mischbehälter und einer darin um eine horizontale Achse umlaufenden Mischwelle.

Nach Zugabe der Mischungkomponenten, die z. B. aus Füllstoffen, faserartigen Bestandteilen und flüssigen Bindemitteln bestehen, wird der Mischprozeß in Gang gesetzt und nach Abschluß desselben die Masse getrocknet. Für die Trocknung des feuchten Schüttgutes wird der mit einem Doppelmantel versehene Mischbehälter beheizt und der Mischerinnenraum unter Vakuum gesetzt. Durch das Vakuum setzt die Verdampfung der flüssigen Komponenten ein, der Dampf kann abgezogen und in einem Kondensator niedergeschlagen werden. Mit zunehmendem Trocknungsgrad nimmt die Verdampfungswirkung ab, weil durch eine sich zwischen Mischwerk und Behälterwandung aufbauende Grenzschicht der Wärmedurchgang erheblich verschlechtert wird, so daß die für die Verdampfung notwendige Verdampfungsenergie dem Mischgut nicht mehr zugeführt werden kann. Es kommt hinzu, daß durch das Trockenwerden des Produktes die berührende Wärmeaustauschfläche zwischen Produktpartikeln und Behälterwandung kleiner wird. Auch dies behindert den Wärmeübergang. In der Praxis stellte sich heraus, daß die Vakuumtrocknung in Mischmaschinen zwar relativ spontan und heftig einsetzt, aber dann wegen der geschilderten Probleme rasch zum Erliegen kommt bzw. sich zeitlich so in die Länge zieht, daß auch dieses Verfahren häufig aus wirtschaftlichen Überlegungen nicht angewendet werden kann.

Man kennt auch Trocknungsverfahren, die sich unmittelbar einem Mischprozeß anschließen, wobei mit sogenannter Durchlüftungstrocknung gearbeitet wird. Hier wird auf den Einsatz von Vakuum bewußt verzichtet und stattdessen mit einer sogenannten Durchlüftungstrocknung gearbeitet. Zu diesem Zweck führt man zum Beispiel bei horizontalen Trommelmischern in der unteren Mischbehälterhälfte mit mehreren Düsen Trocknungsluft ein. Die Luft durchströmt das Mischgut und sättigt sich teilweise mit dem Dampf der enthaltenen Flüssigkeit. Diese Art der Entlüftungstrocknung ist sinngemäß verwandt mit der Hordentrocknung, wobei hier der Vorteil zu sehen ist, daß das Mischgut durch die Mischwerkzeuge bewegt und somit der Trocknungsprozeß im Vergleich zu der Hordentrocknung beschleunigt werden kann. Dieser Prozeß besitzt aber den Nachteil, daß für die Abführung der Feuchtigkeit relativ große Luft- bzw. Gasmengen eingesetzt werden müssen. Die Verwendung großer Gasmengen bringt aber Probleme mit dem Abscheiden des Feingutes aus dem Gasstrom mit sich. Das bedeutet in der Praxis, daß man auf längere Trocknungszeiten ausweichen muß, um die Gasgeschwindigkeiten technisch vertretbar zu halten.

Die DE-B-1 119 773 beschreibt ein Verfahren mit einer ersten Großtrocknungsstufe und einer unmittelbar folgenden zweiten Feintrocknungsstufe. Die verdampfte Flüssigkeit wird in einem geschlossenen Kreislauf umgewälzt und dabei durch einen Dampfüberhitzer geführt. In beiden Stufen wird bei Unteratmosphärendruck ohne Wirbelschicht gearbeitet.

Die JP-A-6 133 225 beschreibt einen Doppelkonus-Vakuummischer mit einstufiger Arbeitsweise insgesamt unter Vakuum.

Der Erfindung liegt die Aufgabe zugrunde, ein Verfahren zu schaffen, welches obige Nachteile beseitigt und mit geringstem Energieeinsatz kürzestmögliche Trockenzeiten ermöglicht.

Das erfindungsgemäße Verfahren zum Entzug von Flüssigkeit aus feuchtem Material, bei dem in einem ersten Verfahrensabschnitt aus dem feuchten Material die enthaltene Flüssigkeit bei Unteratmosphärendruck unter Ausnutzung des Wärmepotentials des feuchten Materials wenigstens teilsweise verdampft und in einem zweiten sich unmittelbar anschließenden Verfahrensabschnitt weiter getrocknet wird, ist dadurch gekennzeichnet, daß das Material in einem zirkulierenden, durch eine Mischeinrichtung mechanisch erzeugten Wirbelbett im wesentlichen in seiner Gesamtheit durchmischt wird und daß in dem zweiten Verfahrensabschnitt ein von dem Dampf der zu entziehenden Flüssigkeit verschiedenes, erwärmtes Gas mit einem Druck höher als Atmosphärendruck durch das Wirbelbett geführt und wenigstens teilweise mit dem Dampf der zu entziehenden Flüssigkeit gesättigt und der Trocknungsvorgang beendet wird.

Bei dem hier genannten Verfahren liegt der entscheidende Vorteil darin, daß in dem sich in Rotation befindlichen zirkulierenden Wirbelbett zunächst ohne Energiezufuhr von außen, d. h. unter Vermeidung aller oben beschriebenen Nachteile des Wärmeübergangs durch eine Wand, der Verdampfungsprozeß der Flüssigkeit bei entsprechend abgesenktem Druck spontan einsetzen kann, weil jede Partikel bereits die zur Verdampfung notwenge Energie enthält und durch das genannte Wirbelbett ein freier Austritt des Dampfes gewährleistet ist. Sobald der Energieeinhalt für die weitere Verdampfung von Flüssigkeit weitgehend aufgebraucht ist, wird nicht versucht, zusätzlich Energie über z. B. Mantelbeheizung des Mischbehälters nachzuschieben, sondern es wird der Vakuum-Trocknungsprozeß abgebrochen und unmittelbar ohne zeitliche Unterbrechung auf den Durchlüftungstrocknungsprozeß umgeschaltet. Hierzu wird trockenes erwärmtes Gas durch das Wirbelbett geführt. Dabei gibt das erwärmte Gas einerseits Energie an das Schüttgut ab und sättigt sich wenigstens teilweise, im Idealzustand vollständig, mit dem Dampf der Flüssigkeit. Durch die Einführung des Gases direkt in das mechanisch erzeugte Wirbelbett kann von vornherein mit optimalen Gasgeschwindigkeiten gearbeitet werden, weil die Erzeugung des Wirbelbettes nicht von der Menge und Geschwindigkeit des Gasstromes abhängig ist. Es bietet sich darüber hinaus der weitere Vorteil, daß die Gasgeschwindigkeit bzw. die Gasmenge optimal dem Trocknungsvorgang angepaßt werden kann. Aus physikalischen Überlegungen ist es einleuchtend, daß bei gegebener relativer Feuchte des zur Trocknung eingesetzten Gases die abgeführte Dampfmenge im wesentlichen nur von der Temperatur des Gases bzw. seinem Sättigungsvermögen und von der Energiezufuhr über den Wärmeinhalt des Gases abhängig ist. Es sind hier somit ideale Voraussetzungen geschaffen, um feinfühlig Temperatur des Gases, Gasmenge, relative Feuchte des Gases vor Einleitung in den Trocknungsprozeß usw. aufeinander abzustimmen.

Das Wärmepotential des Materials kann aus vorausgehendem Erhitzen des Materials und/oder aus einer Erwärmung des Materials infolge des Durchmischens in der Mischeinrichtung stammen.

Zweckmäßig wird das Wirbelbett mit einer vertikalen und einer tangentialen Komponente zirkuliert.

Eine weitere erfindungsgemäße Ausgestaltung des Verfahrens sieht vor, daß das zur Trocknung verwendete Gas in einem geschlossenen Kreislauf geführt, vor der Zuführung in den Trocknungsprozeß in einem Wärmetauscher erwärmt und nach seiner wenigstens teilweisen Sättigung mit Dampf aus der Schüttgutfeuchte einem Waschprozeß zur Direktkondensation zugeführt wird.

Im Rahmen einer weiteren erfindungsgemäßen Ausgestaltung des Verfahrens ist es günstig, für den Waschprozeß die gleiche Flüssigkeit zu verwenden, wie die in dem Gut enthaltene.

Darüber hinaus ist es weiterhin zweckmäßig, daß während des Waschprozesses bzw. des Direktkondensationsprozesses das Kreislaufgas mit Flüssigkeit niedrigerer Temperatur gekühlt und bis zum Sättigungszustand entsprechend dem neuen Temperaturniveau von dem Dampf befreit wird.

Der geschlossene Kreislauf für das Gas hat unter anderem den entscheidenden Vorteil, daß Emissionen an die Umwelt vermieden werden können und daß außerdem nur eine Teilbefreiung des Gases von dem Dampf erforderlich wird.

Im Sinne einer weiteren Ausgestaltung des Verfahrens wird vorgeschlagen, daß die als Waschflüssigkeit benutzte Flüssigkeit in einem eigenen Kreislauf auf die für die Kondensation des Dampfes erforderliche Temperatur gekühlt wird. Hierbei ist es möglich, durch Verwendung von sogenannten Kältesätzen die Temperatur der Flüssigkeit bis kurz vor ihren Erstarrungspunkt beliebig abzusenken. Damit lassen sich die Temperatur des Gasstromes und die Auskondensation des darin enthaltenen Dampfes in optimale Weise steuern.

Es ist auch günstig, daß zusätzlich Fremdenergie in den Kreislauf des Gasstromes vor Eintritt in das Wirbelbett eingebracht wird, sofern die Wärmeversorgung aus dem Energiepotential des aus dem Wirbelbett kommenden Gasstromes nicht ausreicht. Gemäß einer Weiterbildung soll die für die Verdampfung notwendige zusätzliche Energie durch Steuerung der Umlaufgeschwindigkeit des Wirbelbettes als Friktioswärme eingebracht werden. Dies könnte zum Beispiel durch eine Regelung der Drehzahl in Abhängigkeit von dem erforderlichen Energiebedarf erfolgen. Hiermit ist der entscheidende Vorteil verbunden, daß die notwendige Wärmeenergie unmittelbar im feuchten Material eingebracht wird. Damit werden örtliche Überhitzungen von Material bzw. den Wärmeübergang verschlechternde Wirkungsgrade vermieden. Dies führt zu einem gleichmäßigen Entzug von Flüssigkeit aus allen Partikeln des Gutes.

Eine weitere Ausgestaltung des Verfahrens besteht darin, daß die für die Erwärmung erforderliche Energie weitgehend aus dem Energiepotential des aus dem Wirbelbett kommenden Gasstromes durch Abkühlung und durch Kondensation des Dampfes entnommen und mittels einer Wärmepumpe dem abgekühlten Gasstrom wieder zugeführt wird. Wie bereits oben erwähnt, ist der Verdampfungsvorgang an das Vorhandensein latenter Wärmeenergie bzw. an die Zufuhr von Energie gebunden. Zu diesem Zweck wird der Gasstrom vor Zuführung in das Wirbelbett zweckmäßig erwärmt. Bei der Befreiung des Gases von dem Flüssigkeitsdampf wird Energie entzogen. Diese Energie könnte z. B. ohne Beeinflussung der Umwelt an die Umgebung abgegeben werden, indem man hierfür einen indirekten Wärmeaustausch mit einem Wärmeaustauscher vorsieht. Statt dessen wird erfindungsgemäß vorgeschlagen, die an die Umgebung abzugebende Energie mittels einer Wärmepumpe dem Gasstrom nach seinem Entladungsprozeß im Rahmen der Direktkondensation vor Eintritt in das Wirbelbett wieder zuzugeben. Auf diese Weise wird erheblich Energie gewonnen und eine zusätzliche Belastung der Umwelt vermieden.

Nach einer weiteren Ausgestaltung des Verfahrens wird als das im Kreislauf geführte Gas ein Inertgas, z. B. Stickstoff, Kohlensäure oder dergleichen, verwendet. Dies hat den zusätzlichen Vorteil, daß zum Beispiel Gefahren, welche durch die Trocknung von lösungsmittelhaltigem Schüttgut herrühren, z. B. Explosionsgefahren, ausgeschlossen werden können.

Zweckmäßig wird das Inertgas nur in solchen Mengen zugegeben, daß die Explosionsgrenze unterschritten wird. Dabei wird günstigerweise ein sogenannter Sauerstoffanalysator den maximal zulässigen Sauerstoffgehalt überwachen und bei Bedarf die Nachdosierung von Inertgas einleiten. Hiermit werden die Vorteile der kombinierten Anwendung von Vakuum-Trocknung, Durchlüftungstrocknung und der Verwendung von Inertgas im Rahmen der Durchlüftungstrocknung angewendet.

Bei der Verwendung von Inertgas lassen sich die Explosionsrisiken erheblich reduzieren, so daß auf aufwendige Schutzmaßnahmen verzichtet werden kann.

Für das erfindungsgemäße Verfahren ist es aus wirtschaftlichen und prozeßzeitbedingten Gründen günstig, den Zeitpunkt der unmittelbaren Umschaltung von Unteratmosphärendruck- auf Durchlüftungstrocknung zu erkennen. Man kann diesen Umschaltpunkt für bekannte Rezepte, z. B. einfach in Abhängigkeit von der Zeit, festlegen. Wesentlich sinnvoller ist es aber, den Temperaturverlauf des Schüttgutes zu bestimmen, um, sobald der Prozeß aus dem optimalen Temperaturbereich herausläuft, auf Durchlüftungstrocknung umzuschalten. Günstig ist es hierfür, nachdem die Temperaturmessung immer mit dem Problem des Wärmeübergangs an den Temperaturfühler verknüpft ist, kontinuierlich den Absolutdruck innerhalb des Mischbehälters zu messen.

Aus der Kenntnis des Absolutdruckes kann die zugehörige Gleichgewichtstemperatur des Dampf-Gas-Gemisches errechnet und die Umschaltung durchgeführt werden.

Weiterhin ist es vorteilhaft, anstelle der Absolutdruckmessung die zeitliche Zunahme des Kondensatanfalles in dem Kondensatsammelbehälter festzustellen. Sobald in dem zeitlichen Verlauf die Kondensatbildung sich einer Asymptode nähert, ist der Zeitpunkt gekommen, um die Unteratmosphärendruck-Trocknung zu verlassen und auf Durchlüftungstrocknung überzugehen. Dieser zeitliche Verlauf der Kondensatbildung kann in einem Rechner ermittelt und damit die automatische Umschaltung herbeigeführt werden.

Es ist weiterhin vorteilhaft, daß sowohl der aus dem Wirbelbett kommende Vakuum-Dampf-Strom als auch der mit Dampf beladene Gasstrom durch dieselbe Filtereinheit geführt werden.

Dadurch, daß der Gasstrom im zweiten Verfahrensabschnitt mit einem höheren als Atmosphärendruck durch das Wirbelbett geführt wird, wird der Trocknungsprozeß beschleunigt, da das unter höherem Druck stehende Gas eine größere Menge Dampf aufnehmen kann, und somit kann die Anzahl der Kreisläufe des Gases durch das System erheblich reduziert werden.

In der Zeichnung bedeuten
- Fig. 1: ein Fließbild einer Ausführungsform des erfindungsgemäßen Verfahrens,
- Fig. 2: den Anlagenteil der Durchlüftungstrocknung mit der wärmetechnischen Kopplung durch eine Wärmepumpe,
- Fig. 3: schematisch den Kondensatsammelbehälter mit Meßeinrichtungen für die Kondensatmenge,
- Fig. 4: schematisch den Aufbau eines Regelkreises zur Druck-Konstanthaltung innerhalb des Behandlungsraumes und
- Fig. 5: ein Fließbild einer anderen Ausführungsform des erfindungsgemäßen Verfahrens.

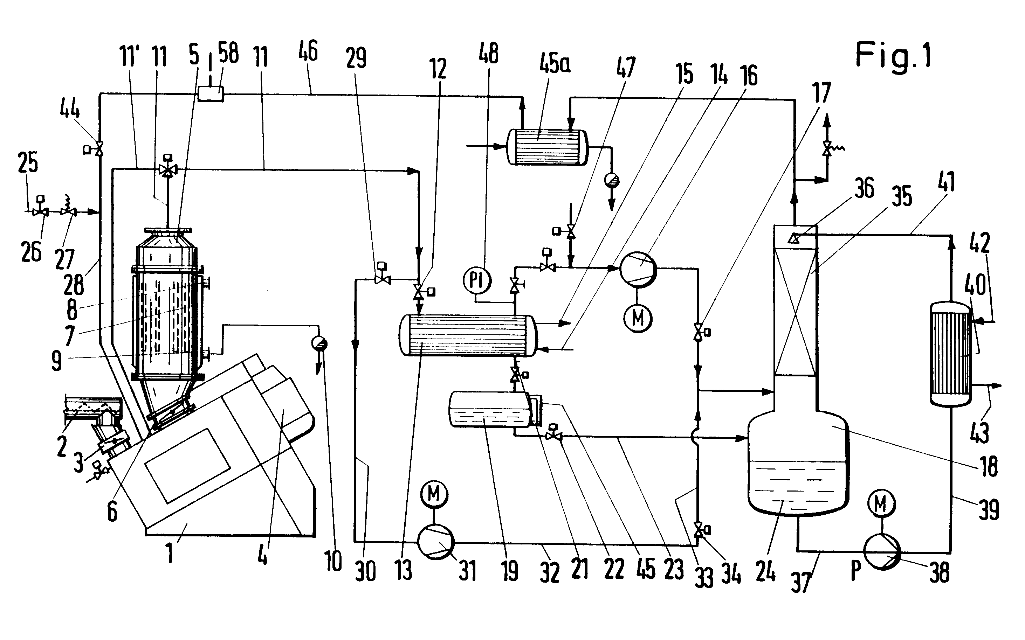

In Fig. 1 besitzt der für die Durchführung des Verfahrens benötigte vakuumfeste Mischer 1 eine Produktzuführung 2 mit einer verschließbaren Klappe 3. Das Wirbelbett wird mit einem Antriebsmotor 4 über ein nicht dargestelltes Mischwerkzeug erzeugt. Am oberen Kopfende des Mischers ist ein Brüdenfilter 5 aufgesetzt. Zwischen Brüdenfilter und Mischraum befindet sich eine Klappe 6.

Das Gehäuse des Brüdenfilters ist mit einem Doppelmantel 7 für die Zufuhr eines Heizmediums durch den Stutzen 8 und die Abfuhr des Heizmediums aus dem Stutzen 9 bzw. im Falle einer Dampfheizung einem Kondensatablaß 10 versehen. Im Falle des Vakuum-Betriebes ist das Mischerinnere über die Rohrleitung 11 bzw. 11' mit dem Ventil 12 mit einem Kondensator 13 verbunden. Der Kondensator wird über die Zu- und Abläufe 14 und 15 von Kühlmedium durchflossen. Die Vakuumpumpe 16 ist mit dem dampf- bzw. kondensatführenden Innenraum des Kondensators verbunden. Die Auspuffseite der Vakuumpumpe ist mit der Kondensationskolonne 18 verbunden.

Das Ventil 47 dient im Zusammenhang mit der Druckmeßeinrichtung 48 und einem hier nicht dargestellten Regler zur Steuerung des Unterdruckes während des Vakuum-Betriebes bzw. zur Entspannung des Systems von Vakuum auf Atmosphärendruck.

Das in dem Kondensator niedergeschlagene Kondensat gelangt in den Kondensatorsammelbehälter 19. Die Ventile 21, 22 dienen der barometrischen Trennung zwischen der Kondensationskolonne 18 und dem unter Vakuum stehenden Kondenator 13. Das Kondensat aus dem Kondensationssammelbehälter 19 wird über die Rohrleitung 23 dem Sammelraum 24 der Kondensationskolonne 18 zugeführt.

Die Gaszufuhr für die Durchlüftungstrocknung erfolgt über die Leitung 25, das Ventil 26 und das Druckminderventil 27 in die Gasleitung 28. Im Falle der Durchlüftungstrocknung sind die Ventile 12 und 17 geschlossen. Das mit Brüden beladene Gas gelangt über das Brüdenfilter 5, die Rohrleitungen 11 und 30 mit Hilfe des Gebläses 31 durch die Rohrleitungen 32 und 33 in die Kondensationskolonne 18. In diesem Falle sind die Ventile 29 und 34 geöffnet. Im Falle des Betriebes mit Schutzgas überwacht ein Sauerstoffanalysator 58 den maximal zulässigen Sauerstoffgehalt des Schutzgases.

Die Kondensationskolonne 18 besteht aus dem Kondensationssammelraum 24, dem eigentlichen Kolonnenkörper 35 und einer hier nicht näher dargestellten Flüssigkeitsverteilereinrichtung 36.

Während des Betriebes wird aus dem Sammelraum 24 der Kondensationskolonne 18 Flüssigkeit über die Leitungen 37, 39, 41 von der Pumpe 38 durch den Wärmetauscher 40 zu der Verteilereinrichtung 36 geführt. Der Wärmetauscher 40 ist mit Zu- und Abläufen 42 und 43 für ein Kühlmedium ausgerüstet.

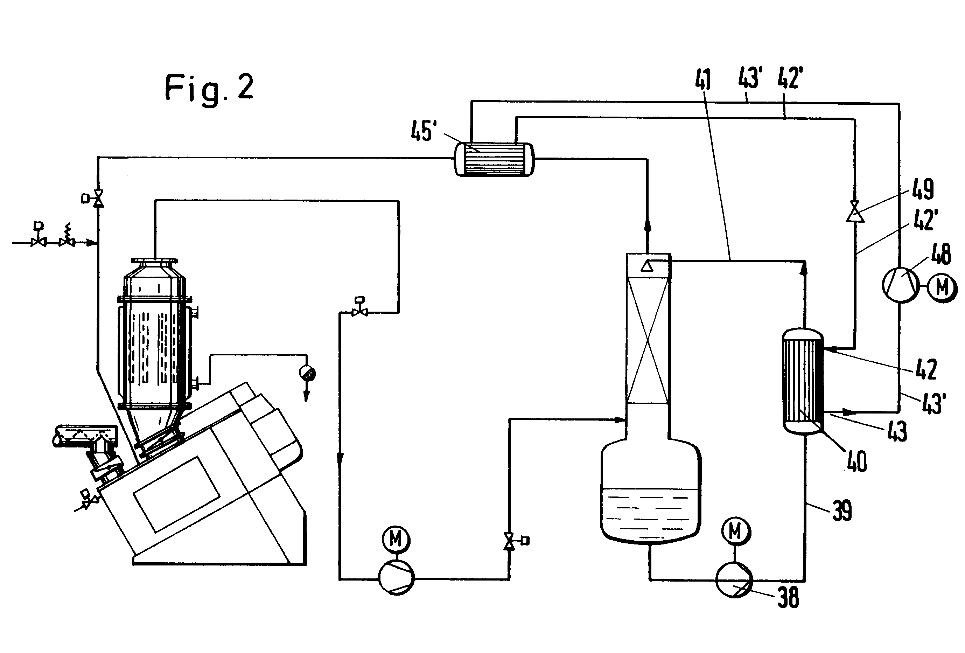

In Fig. 2 ist der Anlagenteil der Durchlüftungstrocknung mit der wärmetechnischen Kopplung durch eine Wärmepumpe zwischen dem Wärmetauscher 40 (Kühlung des Kondensates) und dem Wärmetauscher 45 (Erwärmung des Kreislaufgases) dargestellt. Die Wärmepumpe ist hier symbolisch gezeichnet durch die beiden Elemente Kompressor 48 und Verdampfer 49. Die beiden Wärmetauscher 45 und 40 sind mit dem Rohrleitungssystem 42' und 43' über die Wärmepumpe verbunden.

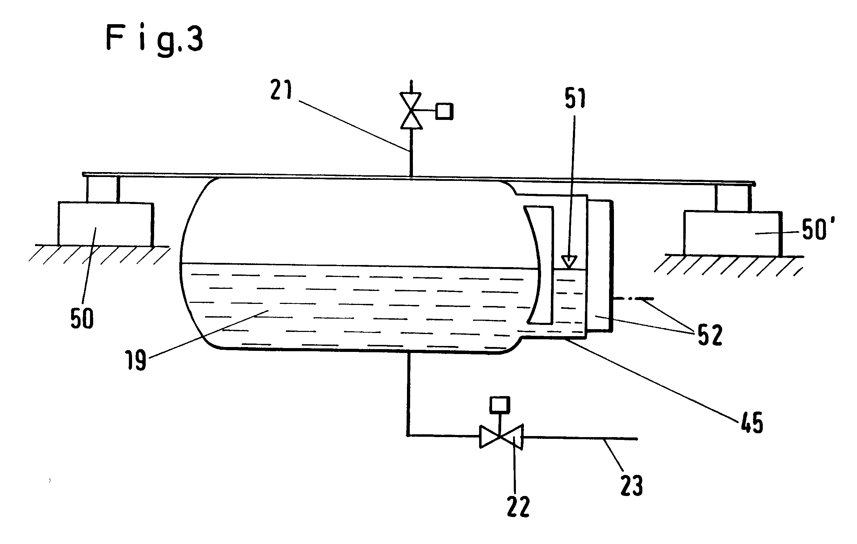

In Fig. 3 ist der Kondensatsammelbehälter 19 mit Meßeinrichtungen zur Bestimmung der Kondensatmenge dargestellt. Der Kondensatzulauf erfolgt über die Rohrleitung 21 und der Kondensatablauf über die Rohrleitung 23.

45 stellt die Niveaumeßeinrichtung dar. Sie ist hier als Schwimmereinrichtung gezeigt. Der Schwimmer 51 nimmt je nach Inhalt des Kondensatsammelbehälters eine entsprechende Höhenposition ein. Diese Höhenposition wird von einem Meßwertgeber 52 erfaßt und an einen hier nicht näher dargestellten Rechner übermittelt. Für höhere Meßgenauigkeiten wird man den Kondensatsammelbehälter 19 wägetechnisch aufhängen. In diesem Fall sind die Rohrleitungen 21 und 23 so verlegt, daß sie das Meßergebnis nicht beeinflussen können.

Die beiden Meßzellen 50 und 50' ermitteln laufend das Gewicht des Behälters mit Inhalt und leiten die Ergebnisse dem hier nicht dargestellten Rechner zu.

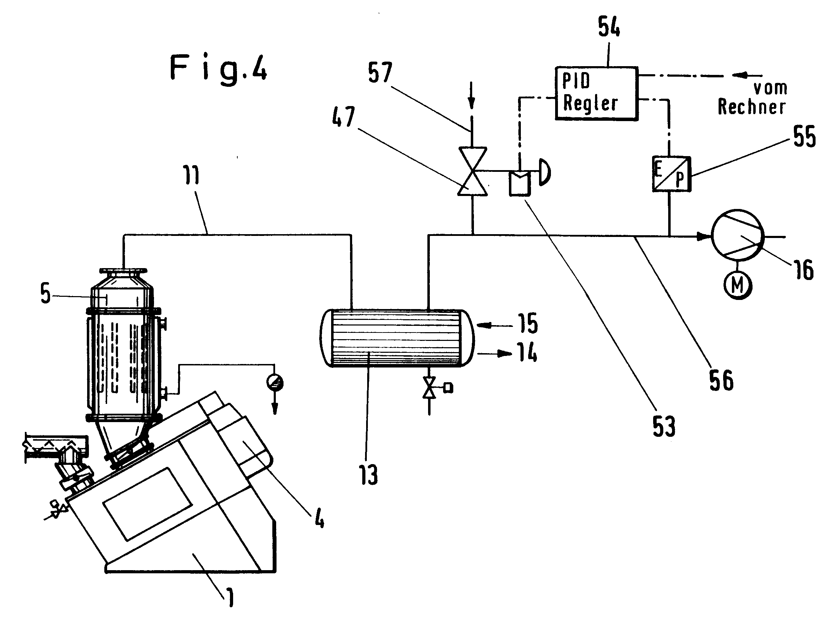

In Fig. 4 ist schematisch der Aufbau eines Regelkreises zur Druck-Kostanthaltung innerhalb des Behandlungsraumes dargestellt. In der Rohrleitung 56 zwischen Vakuum-Pumpe 16 und Kondensator 13 befinden sich ein Stellventil 47 mit Stellungsregler 53 und ein Meßumformer 55 für die Messung des Absolutdruckes. Der Meßumformer 55 und das Stellventil 57 bzw. dessen Stellungsregler 53 sind mit dem Regler 54 elektrisch verbunden, wobei der Sollwert entweder von Hand eingegeben werden kann oder von einem hier nicht dargestellten Rechner kommt.

Bei der Durchführung des Verfahrens wird die Klappe 3 an der Produktzufuhr verschlossen. Die Klappe 6 zwischen Brüdenfilter und Vakuum-Mischer werden geöffnet, die Ventile 44, 34 und 29 werden verschlossen. Nach der Inbetriebnahme der Vakuum-Pumpe 16 strömen die Brüden durch das Brüdenfilter 5 über die Rohrleitung 11 in den Kondensator 13 und werden dort auskondensiert. Das Kondensat gelangt in den Kondensatsammelbehälter 19. Dieser Kondensatsammelbehälter 19 hat eine Füllstandsanzeige 45 mit einer hier nicht dargestellten Meßwertfernübertragung. Mit der Füllstandsanzeige kann der zeitlich abhängige Kondensatanfall meßtechnisch erfaßt und dem hier nicht dargestellten Rechner übermittelt werden.

Dies erfolgt z. B. durch eine stirnseitig angebrachte Einrichtung mit einem Schwimmerkörper 51 und der zugehörigen Meßwerterfassung 52 oder alternativ bei der wägetechnischen Aufhängung des Kondensatbehälters 19 mit den beiden Meßzellen 50 und 50'.

Für die Einhaltung eines bestimmten Temperaturprofiles wird dem System ein Absolutdruck vorgegeben. Dieser Absolutdruck ergibt sich aus der Gleichgewichtsbestimmung zwischen der Temperatur und dem Dampfdruck der jeweiligen Flüssigkeit. Hierzu dient ein Regler 54, welcher den von dem Rechner kommenden Sollwert mit dem Druckinhalt des Systems vergleicht. Für die Druckerfassung ist ein sogenannter Absolutdruck-Sensor 55 mit einem zugehörigen Meßumformer vorgesehen. Weichen Soll- und Istwerte voneinander ab, so erteilt der Regler 54 dem Stellungsregler 53 an dem Stellventil 47 entsprechende Impulse, womit die Falschluft bzw. Gaszuführung über den Rohrleitungsanschluß 57 geregelt wird.

Nach Beendigung des Vakuum-Trocknungsabschnittes wird der Kondensatsammelbehälter 19 in den Kondensatsammelbehälter 24 der Kondensationskolonne 18 entleert. Nach dem erfolgten Umschalten auf Durchlüftungstrocknung werden die Ventile 12 und 17 geschlossen und die Ventile 29 und 34 geöffnet.

Der noch unter Vakuum stehend Innenraum des Mischerbehälters wird über die Rohrleitung 25, das Ventil 26, das Druckminderventil 27 und die Rohrleitung 28 mit Gas befüllt bzw. mit Schutzgas inertisiert. Wie während des Vakuumbetriebes ist der Doppelmantel 7 des Brüdenfilters 5 von einem Heizmedium durchflossen, um ein Auskondensieren der Brüden an der Gehäusewandung des Filters zu vermeiden. Das in dem Wärmetauscher 45a erwärmte Gas gelangt über die Rohrleitung 46 in das Innere des Mischbehälters und wird dort in das rotierend zirkulierende Wirbelbett eingeführt, wobei es einerseits an Temperatur verliert und andererseits sich mit Dampf belädt. Das Gas bzw. das Schutzgas wird mit dem Gebläse 31 durch die Kondenationskolonne 18, den Wärmetauscher 45 und den Mischer im Kreislauf gefördert. Das mit Dampf gesättigte bzw. teilweise gesättigte Gas gelangt über die Rohrleitungen 11, 30, 32 in die Kondensationskolonne 18. Von hier aus durchströmt es die zum Beispiel mit Füllkörpern belegte Kolonne 35. In der Kolonne 35 wird das Gas im Gegenstrom von dem mit der Pumpe 38 im Kreislauf geförderten und im Wärmetauscher 40 abgekühlten Lösungsmittel gekühlt, und der Dampfanteil wird ausgewaschen. Durch die sogenannte Direktkondensation in der Kolonne 35 erzielt man für die Kühlung des Gasstromes sehr hohe Wärmeübergangszahlen, und man vermeidet vor allen Dingen eine Nebelbildung während des Kühlvorganges. Im weiteren Kreislauf wird das von Flüssigkeitsdämpfen weitgehend befreite und abgekühlte Gas dem Wärmetauscher 45a erneut zugeführt, dort erwärmt, getrocknet und wieder dem zirkulierenden Wirbelbett zugeführt.

Vor dem Eintritt des Schutzgases in das Wirbelbett wird der Sauerstoffgehalt des Gases mit dem Sauerstoffanalysator 58 zum Beispiel in der Rohrleitung 46 ermittelt. Gegebenenfalls erfolgt eine weitere Einspeisung von Schutzgas mit Hilfe eines hier nicht dargestellten Regelkreises.

Eine Wärmepumpe, dargestellt mit den beiden Elementen Kompressor 48 und Verdampfer 49, transportiert die in dem Wärmetauscher 40 entzogene Wärmeenergie zu dem Wärmetauscher 45a, wo das Gas bzw. Schutzgas wieder erwärmt wird.

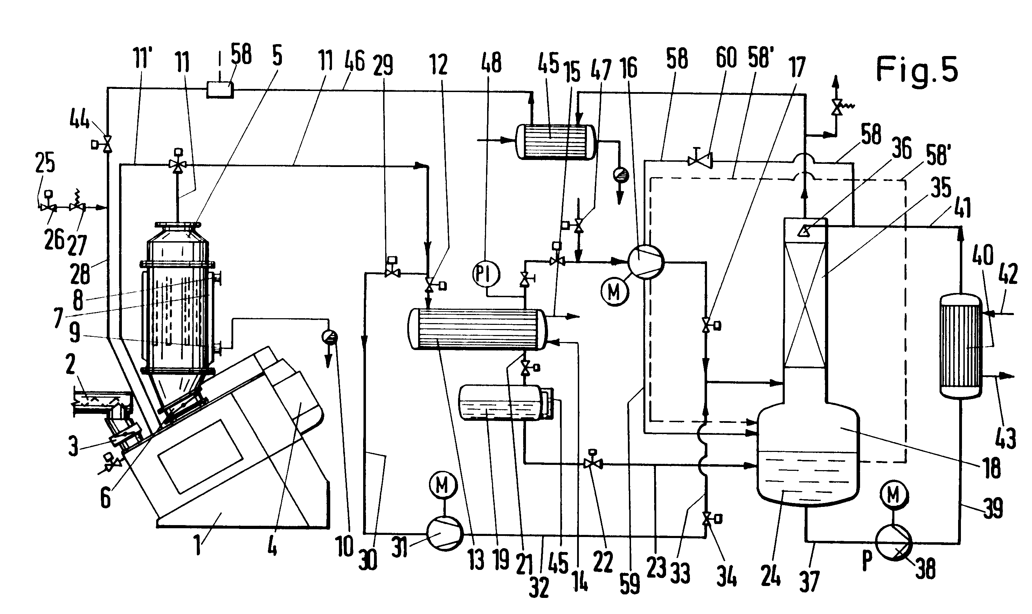

Die in Fig. 5 dargestellte Variante unterscheidet sich von der in Fig. 1 dargestellten Ausführungsform dadurch, daß die Pumpe 16, die zweckmäßig eine Flüssigkeitsring-Vakuumpumpe ist, mit Flüssigkeit aus dem Sammelraum 24 der Kondensationskolonne 18 betrieben und die Flüssigkeit anschließend in den Sammelraum 24 zurückgeführt wird. Dadurch wird vermieden, daß kontaminierte Betriebsflüssigkeit der Pumpe in die Umwelt gelangt.

Nach der in Fig. 5 durch durchgezogene Linien gezeigten Variante wird ein Teilstrom der aus dem Sammelraum 24 über den Wärmetauscher 40 gehenden Flüssigkeit über Leitung 58 mit Ventil 60 als Betriebsflüssigkeit der Pumpe 16 zugeführt und von dort über Leitung 59 in den Sammelraum 24 zurückgeführt.

Nach der in Fig. 5 gestrichelt dargestellten Variante wird aus dem Sammelraum 24 Flüssigkeit direkt über Leitung 58' der Pumpe 16 zugeführt und gelangt von dort wiederum zurück zum Sammelraum 24.

## Patentansprüche

1. Verfahren zum Entzug von Flüssigkeit aus feuchtem Material, bei dem in einem ersten Verfahrensabschnitt aus dem feuchten Material die enthaltene Flüssigkeit bei Unteratmosphärendruck unter Ausnutzung des Wärmepotentials des feuchten Materials wenigstens teilsweise verdampft und in einem zweiten sich unmittelbar anschließenden Verfahrensabschnitt weiter getrocknet wird, **dadurch gekennzeichnet**, daß das Material in einem zirkulierenden, durch eine Mischeinrichtung mechanisch erzeugten Wirbelbett im wesentlichen in seiner Gesamtheit durchmischt wird und daß in dem zweiten Verfahrensabschnitt ein von dem Dampf der zu entziehenden Flüssigkeit verschiedenes, erwärmtes Gas mit einem Druck höher als Atmosphärendruck durch das Wirbelbett geführt und wenigstens teilweise mit dem Dampf der zu entziehenden Flüssigkeit gesättigt und der Trocknungsvorgang beendet wird.

2. Verfahren nach Anspruch 1, **dadurch gekennzeichnet**, daß das Wirbelbett mit einer vertikalen und einer tangentialen Komponente zirkuliert.

3. Verfahren nach einem der Ansprüche 1 und 2, **dadurch gekennzeichnet**, daß das im zweiten Verfahrensabschnitt zur Trocknung verwendete Gas in einem geschlossenen Kreislauf geführt, in einem Wärmetauscher erwärmt und nach seiner wenigstens teilweisen Sättigung mit Dampf der zu entziehenden Flüssigkeit einem Waschprozeß zugeführt wird.

4. Verfahren nach Anspruch 3, **dadurch gekennzeichnet**, daß als Waschflüssigkeit im Waschprozeß die gleiche Flüssigkeit wie die in dem Material enthaltene, zu entziehende Flüssigkeit verwendet wird.

5. Verfahren nach einem der Ansprüche 3 und 4, **dadurch gekennzeichnet**, daß während des Waschprozesses das Gas mit Flüssigkeit niedrigerer Temperatur gekühlt und bis zum Sättigungszustand entsprechend dem neuen Temperaturniveau von dem aufgenommenen Dampf befreit wird.

6. Verfahren nach Anspruch 5, **dadurch gekennzeichnet**, daß die als Waschflüssigkeit benutzte Flüssigkeit in einem eigenen Kreislauf auf die für eine Kondensation des Dampfes erforderliche Temperatur gekühlt wird.

7. Verfahren nach einem der Ansprüche 1 bis 6, **dadurch gekennzeichnet**, daß die für die Erwärmung des Gases erforderliche Energie wenigstens teilweise aus dem Energiepotential des aus dem Wirbelbett kommenden Gasstromes durch Abkühlung und durch Kondensation des Dampfes entnommen und mittels einer Wärmepumpe dem abgekühlten Gasstrom wieder zugeführt wird.

8. Verfahren nach Anspruch 7, **dadurch gekennzeichnet**, daß zusätzliche Fremdenergie in den Kreislauf des Gasstromes vor Eintritt in das Wirbelbett eingeführt wird, sofern die Wärmeenergie aus dem Energiepotential des aus dem Wirbelbett kommenden Gasstromes nicht ausreicht.

9. Verfahren nach Anspruch 8, **dadurch gekennzeichnet**, daß die für die Verdampfung notwendige zusätzliche Energie durch Steuerung der Umlaufgeschwindigkeit des Wirbelbettes als Friktionswärme eingeführt wird.

10. Verfahren nach einem der Ansprüche 1 bis 9, **dadurch gekennzeichnet**, daß als das Gas in dem zweiten Verfahrensabschnitt ein Inertgas verwendet wird.

11. Verfahren nach Anspruch 10, **dadurch gekennzeichnet**, daß das Inertgas nur in solchen Mengen zugegeben wird, daß die Explosionsgrenze unterschritten wird.

12. Verfahren nach einem der Ansprüche 9, 10 oder 11, **dadurch gekennzeichnet**, daß ein Sauerstoffanalysator den maximal zulässigen Sauerstoffgehalt überwacht und bei Bedarf die Nachdosierung von Inertgas einleitet.

13. Verfahren nach einem der Ansprüche 1 bis 12, **dadurch gekennzeichnet**, daß die für die Umschaltung vom ersten auf den zweiten Verfahrensabschnitt vorgesehene Temperatur durch Absolutdruckmessung und Errechnung der Gleichgewichtstemperatur des Dampf-Gas-Gemisches ermittelt wird.

14. Verfahren nach Anspruch 13, **dadurch gekennzeichnet**, daß die in einem Kondensatsammelbehälter (19) anfallende Kondensatmenge gewichtsmäßig bzw. volumetrisch erfaßt und als Maß für die Umschaltung vom ersten zum zweiten Verfahrensabschnitt benutzt wird.

15. Verfahren nach einem der Ansprüche 1 bis 14, **dadurch gekennzeichnet**, daß sowohl der aus dem Wirbelbett kommende Vakuum-Dampf-Strom als auch der mit Dampf beladene Gasstrom durch dieselbe Filtereinheit geführt werden.

16. Verfahren nach einem der Ansprüche 1 bis 15, **dadurch gekennzeichnet**, daß ein als Betriebsflüssigkeit für die Vakuumpumpe (16) zur Erzeugung des Unteratmosphärendruckes in dem ersten Verfahrensabschnitt die gleiche Flüssigkeit wie die in dem feuchten Material enthaltene, zu entziehende verwendet wird.

17. Verfahren nach Anspruch 16, **dadurch gekennzeichnet**, daß die Betriebsflüssigkeit der Vakuumpumpe (16) aus dem Kondensat des mit dem aus dem Wirbelbett kommenden Gasstrom mitgeführten Dampfes entnommen und mit diesem Kondensat anschließend wieder vereinigt wird.

## Claims

1. A process to extract liquid from moist material, wherein in a first step of the process the liquid contained is at least partly evaporated from the moist material at sub-atmospheric pressure by making use of the heat potential of the moist material, and is further dried in a directly subsequent second step of the process, **characterised in that** basically all the material is mixed in a circulating vortexing bed which is produced mechanically by a mixing device, and that in the second step of the process a heated gas different from the vapour of the liquid to be drawn off is conveyed through the vortexing bed at a pressure which is greater than atmospheric pressure and is at least partly saturated with the vapour of the liquid to be drawn off, and the drying process is ended.

2. A process according to Claim 1, **characterised in that** the vortexing bed circulates with a vertical and tangential component.

3. A process according to one of Claims 1 and 2, **characterised in that** the gas used in the second step of the process for drying is conveyed in a closed cycle, is heated in a heat exchanger, and after being at least partly saturated with vapour of the liquid to be drawn off is supplied to a washing process.

4. A process according to Claim 3, **characterised in that** the same liquid is used in the washing process as washing liquid as the liquid which is contained in the material and which is to be drawn off.

5. A process according to one of Claims 3 and 4, **characterised in that** during the washing process the gas is cooled with a lower temperature liquid and is freed of the vapour taken up until the state of saturation corresponds to the new temperature level.

6. A process according to Claim 5, **characterised in that** the liquid used as washing liquid is cooled in its own cycle to the temperature required for the vapour to condense.

7. A process according to one of Claims 1 to 6, **characterised in that** the energy required for the gas to heat is taken at least partly from the energy potential of the gas flow coming from the vortexing bed by cooling and by condensation of the vapour, and is conveyed back to the cooled gas flow by means of a heating pump.

8. A process according to Claim 7, **characterised in that** additional external energy is introduced into the circulation of the gas flow before it enters the vortexing bed, if the heat energy from the energy potential of the gas flow coming from the vortexing bed is not sufficient.

9. A process according to Claim 8, **characterised in that** the additional energy required for evaporation is introduced as frictional heat by controlling the speed of rotation of the vortexing bed.

10. A process according to one of Claims 1 to 9, **characterised in that** an inert gas is used as the gas in the second step of the process.

11. A process according to Claim 10, **characterised in that** the quantity of inert gas added is such that the explosion boundary is not exceeded.

12. A process according to one of Claims 9, 10 or 11, **characterised in that** an oxygen analyser monitors the maximum admissible content of oxygen and introduces inert gas in a subsequent dosage, if required.

13. A process according to one of Claims 1 to 12, **characterised in that** the temperature provided for switching over from the first to the second step of the process is determined by measuring the absolute pressure and by calculating the equilibrium temperature of the vapour-gas mixture.

14. A process according to Claim 13, **characterised in that** the quantity of condensate occurring in a condensate collecting container (19) is recorded according to weight or volume, and is used as a yardstick for switching over from the first to the second step of the process.

15. A process according to one of Claims 1 to 14, **characterised in that** both the vacuum-vapour-flow coming from the vortexing bed and also the gas flow charged with vapour are conveyed through the same filter unit.

16. A process according to one of Claims 1 to 15, **characterised in that** the operating fluid used for the vacuum pump (16) for producing the sub-atmospheric pressure in the first step of the process is the same fluid as that contained in the moist material and which is to be extracted.

17. A process according to Claim 16, **characterised in that** the operating fluid of the vacuum pump (16) is taken from the condensate of the vapour which is conveyed with the gas flow coming from the vortexing bed and is then reunited with that condensate.

## Revendications

1. Procédé pour l'extraction de liquide hors d'une matière humide, dans lequel le liquide contenu est au moins partiellement évaporé hors de la matière humide, dans une première section de procédé, sous une pression inférieure à la pression atmosphérique en utilisant le potentiel calorifique de la matière humide, et le séchage se poursuit dans une deuxième section de procédé qui se raccorde directement, caractérisé en ce que la matière est mélangée sensiblement dans sa totalité dans un lit fluidisé en circulation, engendré mécaniquement par un dispositif de mélange, et en ce qu'un gaz échauffé, différent de la vapeur du liquide à extraire, est guidé, dans la deuxième section de procédé, à travers le lit fluidisé, sous une pression supérieure à la pression atmosphérique et est au moins partiellement saturé de la vapeur de fluide à extraire et le processus de séchage est achevé.

2. Procédé selon la revendication 1, caractérisé en ce que le lit fluidisé est mis en circulation avec une composante verticale et une composante tangentielle.

3. Procédé selon l'une des revendications 1 ou 2, caractérisé en ce que le gaz utilisé pour le séchage dans la deuxième section de procédé est guidé dans une boucle fermée, échauffé dans un échangeur de chaleur et est amené à un procédé de lavage après avoir été saturé au moins en partie avec de la vapeur du liquide à extraire.

4. Procédé selon la revendication 3, caractérisé en ce que l'on utilise comme liquide de lavage dans le procédé de lavage le même liquide que le liquide à extraire, contenu dans la matière.

5. Procédé selon l'une des revendications 3 ou 4, caractérisé en ce que le gaz est refroidi pendant le procédé de lavage à l'aide d'un liquide à température plus basse et qu'il est libéré de la vapeur captée jusqu'à l'état de saturation, qui correspond au nouveau niveau de température.

6. Procédé selon la revendication 5, caractérisé en ce que le liquide utilisé comme liquide de lavage est refroidi dans une boucle propre à la température nécessaire pour une condensation de la vapeur.

7. Procédé selon l'une des revendications 1 à 6, caractérisé en ce que l'énergie nécessaire pour l'échauffement du gaz est prélevée au moins en partie à partir du potentiel d'énergie du courant gazeux venant du lit fluidisé, par refroidissement et par condensation de la vapeur, et qu'elle est ramenée au courant gazeux refroidi à l'aide d'une pompe à chaleur.

8. Procédé selon la revendication 7, caractérisé en ce qu'une énergie extérieure additionnelle est introduite dans la boucle du courant gazeux avant l'entrée dans le lit fluidisé, dans la mesure où l'énergie thermique venant du potentiel d'énergie du courant gazeux venant du lit fluidisé n'est pas suffisante.

9. Procédé selon la revendication 8, caractérisé en ce que l'énergie additionnelle nécessaire pour l'évaporation est introduite sous forme de chaleur de friction par commande de la vitesse de circulation du lit fluidisé.

10. Procédé selon l'une des revendication 1 à 9, caractérisé en ce qu'un gaz inerte est utilisé comme gaz de la deuxième section de procédé.

11. Procédé selon la revendication 10, caractérisé en ce que le gaz inerte n'est ajouté que selon des quantités adaptées de manière à ne pas passer au-dessous de la limite d'explosion.

12. Procédé selon l'une des revendications 9, 10 ou 11, caractérisé en ce qu'un analyseur d'oxygène surveille la teneur maximale admissible en oxygène et introduit le post dosage de gaz inerte en cas de besoin.

13. Procédé selon l'une des revendications 1 à 12, caractérisé en ce que la température prévue pour la commutation de la première section de procédé à la deuxième est déterminée par mesure de pression absolue et par calcul de la température d'équilibre du mélange vapeur-gaz.

14. Procédé selon la revendication 13, caractérisé en ce que la quantité de condensat qui est produite dans le collecteur (19) de condensat est déterminée en poids ou en volume et est utilisée comme mesure pour la commutation de la première section de procédé à la deuxième.

15. Procédé selon l'une des revendications 1 à 14, caractérisé en ce que tant le courant de vapeur sous vide sortant du lit fluidisé que le courant gazeux chargé de vapeur sont conduits à travers la même unité de filtre.

16. Procédé selon l'une des revendication 1 à 15, caractérisé en ce que l'on utilise, comme liquide de fonctionnement, pour la pompe à vide (16) servant à la génération de la pression inférieure à la pression atmosphérique dans la première section de procédé, le même liquide que celui qui est contenu dans la matière humide et qui doit être extrait.

17. Procédé selon la revendication 16, caractérisé en ce que le liquide de fonctionnement de la pompe à vide (16) est prélevé dans le condensat de la vapeur entraînée avec le courant gazeux sortant du lit fluidisé et qu'il est consécutivement réuni de nouveau à ce condensat.
